# EUROPEAN PATENT SPECIFICATION

(11) **EP 2 528 308 B1**
(45) Date of publication and mention of the grant of the patent: **08.01.2014**
(21) Application number: 12169007.7
(22) Date of filing: 23.05.2012
(51) Int. Cl.: H04M 1/22, H04M 1/725

(54) **Mobile Device Backlight Adjustment Method**
Rückbeleuchtungseinstellungsverfahren für eine mobile Vorrichtung
Procédé de réglage de rétro-éclairage de dispositif mobile

(30) Priority: 25.05.2011 TR 201105056
(43) Date of publication of application: 28.11.2012
(73) Proprietor: Vestel Elektronik Sanayi ve Ticaret A.S., 45030 Manisa (TR)
(72) Inventor: Kizilari, Huseyin Cem, 45030 Manisa (TR)
(74) Representative: Cayli, Hülya

(56) References cited:
- EP-A1- 1 701 331
- EP-A2- 1 217 598
- JP-A- 2002 344 599
- US-A1- 2010 007 638

## Description

### Technical Field

The present invention is related to mobile devices with adjustable backlight.

### Prior Art

Mobile devices generally employ a screen as a user interface for displaying visuals of device functions. Most recent devices employ a colour display (Liquid crystal displays, thin film transistor displays) in which the screen is illuminated using at least one backlight.

Since the displays used in mobile devices are prone to lose visibility due to intensity of ambient light, the devices are generally equipped with a backlight having adjustable intensity. By adjusting the intensity of the backlight, it is possible to make the display visible even the ambient light intensity is high.

However, high intensity backlight requires considerable power. Since the mobile devices generally use a battery to power the device, high intensity backlight considerably degrades the operation time of the device. Therefore to achieve long operation time, the dynamic adjustment of the backlight either by the user or automatically is required. An automated adjustment in this case is useful since manual adjustment of backlight can be unreliable and ineffective.

Several methods are developed for dynamic adjustment of the backlight intensity. The most common method of backlight adjustment is the usage of an ambient light sensor to measure ambient light intensity and control of the backlight intensity in accordance with the measurement. However, an ambient light sensor may lead to maladjustments since all the objects around the device may effect the measurement due to their shadows.

A method for backlight adjustment is disclosed in the patent document US 2010/0007638 wherein a global position of the device is determined and the backlight is adjusted according to weather data acquired from a source. However, the weather data is not adequate to determine the ambient light information.

Another method and system for adjusting backlight of a display of an electronic device is disclosed in the published patent document EP1701331A1. In the method and system of the invention disclosed in said document, information about the ambient environment of the device is also handled during backlight adjustment. The system of the invention disclosed in said document comprises a light sensor and an activation sensor. The light sensor measures the ambient illumination of the device and the activation sensor, which is preferably a sensor sensing the movement of the device, senses that the device is activated or not. When the activation of the device is determined by the activation sensor by sensing the movement of the device for example, the ambient light level of the device is measured by the light sensor and the illumination of the backlight is adjusted according to the ambient light level. Furthermore, the time, location or weather information received by the device can also be handled during backlight illumination adjustment. However in said document, it is not mentioned that the indoor-outdoor use of the device is determined which makes the usage of the time, location and weather information for backlight adjustment meaningful. Therefore, the backlight adjustment method and system of the invention disclosed in said document is not sufficient enough to determine the accurate backlight illumination level of the device.

In another patent document JP2002344599A, adjusting an illumination level of the backlight of a display (preferably a liquid crystal display) automatically according to usage environment information is disclosed. In said document, it is mentioned that the illumination of the backlight is adjusted according to the position of the device (e.g. cellular phone), time, the reception sensitivity of GPS electric waves, the traveling speed of the device, and the azimuth of the display surface of the liquid crystal display. Usage environment can be estimated according to the position of the device, time, the reception sensitivity of GPS electric waves, the traveling speed of the device, and the azimuth of the display surface of the liquid crystal display. Then, their total evaluation allows the illumination level of the backlight for illuminating the liquid crystal display being adjusted automatically. However, also said document does not propose a method for determining the indoor-outdoor use of the device, which ensures the proper adjustment of the backlight illumination.

In another published patent document EP1217598A2 of the state of the art, an automatic brightness control system and method for display devices is provided. The system comprises a light sensor disposed to logarithmically sense ambient light near the lighted display. In the method and system, according to the sensed ambient light the brightness value is determined from a sequence or a table provided in the device and the brightness is adjusted according to these values matching with the measured ambient light value. The sequence or table comprises brightness values handling the day-night conditions in order to improve the user satisfaction. In the invention of the said document, since only day-night conditions are considered, the user needs are not met satisfactorily.

Therefore an advanced method for determination of ambient light and backlight adjustment is required.

### Brief Description of the Invention

The present invention provides a backlight intensity adjustment method for a mobile device comprising a screen, which comprises a backlight, and a positioning system; comprising the steps of; determining a first position of the device using the positioning system; determining a second position of the device using the positioning system after a predetermined waiting time; calculating a positional deviation of the device by differentiating the first position and the second position; if the positional deviation of the device is below a predetermined threshold, identifying the device as in indoor use and adjusting backlight intensity to a predetermined indoor level; if the positional deviation of the device is above the predetermined threshold, identifying the device as in outdoor use; if the device is identified as in outdoor use, determining an ambient condition data comprising position of the sun, weather information and effect of the weather on an ambient light; estimating intensity of the ambient light based on the ambient condition data; adjusting the backlight intensity in accordance with the estimated ambient light intensity.

Within the method of the invention, the display backlight intensity is adjusted intelligently, and effective power saving is achieved. Since the embedded systems are used to determine the device ambient condition data, the method can be implemented without any hardware cost.

### The Object of the Invention

The object of the invention is to provide a backlight adjustment method for mobile devices.

Another object of the invention is to provide a backlight adjustment method in which the device's place of use (indoor/outdoor) is determined, and adjustment is done accordingly.

Another object of the invention is to provide a backlight adjustment method which is applicable to the mobile devices with position determination capability.

### Detailed Description of the Invention

The present invention provides a method for determining the amount of the ambient light and adjusting a backlight of a screen comprised by a mobile device. The method of the invention will now be explained step by step as follows;
- Determining a first position of the device: The position of the mobile device is determined using a positioning system of the device. The positioning system may be a global positioning system, which uses positioning satellites to determine the position, or an assisted positioning system which uses stations of the global communication system for mobile devices.
- Determining a second position of the device: The position of the mobile device is re-determined after a waiting time. The waiting time can be determined by the manufacturer or can be adjusted in proportion to a difference between the second position of the device and the first position of the device.
- Calculating the positional deviation of the device: The positional difference between the first position and the second position is calculated and practically the movement of the device is determined.
- Indoor / outdoor decision: If the positional deviation of the device is below a predetermined threshold, the device is identified as in indoor use and the backlight of the display is adjusted to a predetermined indoor level. If the positional deviation is above the threshold that is if the device is moving, it is identified as in outdoor use and further steps are taken.
- Determining the ambient backlight amount: If the device is mobile, it is considered as in outdoor use, and the ambient condition data comprising the position of the sun, weather information and the effect of the weather on the ambient light are determined. Than the ambient light intensity is estimated depending on the ambient condition. The backlight of the display is adjusted based on the estimated ambient light intensity.

The method of the invention employs an intelligent adjustment system based on the assumption that the device is in indoor use if the position does not change with respect to a predetermined time interval. If the device is moving, it is considered as in outdoor use and the effect of ambient light should be regarded to adjust the backlight intensity of the display. Therefore, the automated adjustment is used whenever it is required and unnecessary adjustment is eliminated.

In various embodiments of the invention, the determination of the first and/or second position of the device can be done using several systems that is applicable within the device. For instance, the position of the device can be determined using global positioning system (GPS). The GPS provides very precise position information as soon as the device is able to communicate with at least 3 satellites. If the device is capable of employing global communication system for mobile devices (GSM), such as GSM phones, 3G modems, it may be preferable to determine positioning using GSM network, which requires no additional positioning device. GSM positioning systems (known as assisted GPS) are less accurate than GPS systems. However, GSM positioning is capable of working indoor wherein some GPS receivers may not be able to communicate to the satellites.

Preferably, the limits of the automated adjustment limits, that are maximum backlight intensity and/or minimum intensity, can be limited by the user. The limitation of adjustment level enables the user to control the visibility of the display and also power consumption of the backlight.

Alternatively, the adjustment weight can be changed. In other words, the ratio of backlight intensity deviation to the ambient light deviation can be adjusted so that the backlight adjustment due to ambient light can be more or less effective.

Within the method of the present invention, devices with the position determination capability are provided with an effective automated display backlight adjustment. The automatic adjustment of the present invention maximized the efficiency of the backlight and decreases the power consumption of the device.

## Claims

1. A backlight intensity adjustment method for a mobile device comprising a screen, which comprises a backlight, and a positioning system wherein said method comprises the steps of;
- Determining a first position of the device using the positioning system;
- Identifying the mobile device is whether indoor use or outdoor use;
- Determining an ambient condition data comprising position of the sun, weather information and effect of the weather on an ambient light; if the device is identified as in outdoor use;
- Estimating intensity of the ambient light based on the ambient condition data;
- Adjusting the backlight intensity in accordance with the estimated ambient light intensity;
**characterized in that** the method further comprises the steps of;
- Determining a second position of the device using the positioning system after a predetermined waiting time ;
- Calculating a positional deviation of the device by differentiating the first position and the second position;
- If the positional deviation of the device is below a predetermined threshold, identifying the device as in indoor use and adjusting backlight intensity to a predetermined indoor level;
- If the positional deviation of the device is above the predetermined threshold identifying the device as in outdoor use and adjusting backlight intensity in accordance with the estimated ambient light intensity.

2. A backlight intensity adjustment method according to claim 1 wherein maximum and/or minimum backlight intensity is limited by a user of the device.

3. A backlight intensity adjustment method according to claim 1 wherein a ratio of deviation of backlight intensity to a deviation of ambient light is adjusted.

4. A backlight intensity adjustment method according to claim 1 wherein said positioning system is a global positioning system.

5. A backlight intensity adjustment method according to claim 1 wherein said positioning system is a global communication system for mobile devices based positioning system.

## Patentansprüche

1. Verfahren zur Einstellung einer Hintergrundbeleuchtung in einem mobilen Gerät, mit einem Schirm mit einem Hintergrundlicht, wobei ein Positionssystem vorhanden ist und das Verfahren die folgenden Schritte aufweist
- Bestimmung einer ersten Position des Gerätes unter Verwendung des Positianssystems;
- Identifikation, ob das mobile Gerät sich in einem Innenraum oder sich außerhalb benutzt befindet;
- Bestimmung von Daten einer Umgebungsbedingung (Zustand), welche die Position der Sonne, Wetterinformation und Auswirkungen des Wetters auf ein Umgebungslicht beinhalten, wenn das Gerät als außerhalb benutzt identifiziert wird;
- Einschätzen der Intensität des Umgebungslichtes auf der Grundlage der Daten der Umgebungsbedingung;
- Einstellen der Hintergrundlicht-Intensität in Übereinstimmung mit oder entsprechend der abgeschätzten Intensität des Umgebungslichtes;
**dadurch gekennzeichnet, dass** das Verfahren folgende weitere Schritte aufweist
- Bestimmung einer zweiten Position des Gerätes unter Verwendung des Positionssystems nach einer vorgegebenen Wartezeit;
- Berechnung einer Positionsabweichung des Gerätes durch Differenzbildung zwischen der ersten und der zweiten Position,
- wenn der Positionsfehler oder die Positionsabweichung des Gerätes unter einem vorbestimmten Schwellenwert liegt, Identifizieren des Gerätes als in einem Innenraum benutzt und Einstellen der Intensität der Hintergrundbeleuchtung auf einen vorgegebenen Innenraum-Pegel;
- wenn die Positionsabweichung des Gerätes oberhalb des vorgegebenen Schwellenwerts liegt, Identifizieren des Gerätes als außerhalb in Benutzung und Einstellen der der Intensität der Hintergrundbeleuchtung in Übereinstimmung mit der geschätzten Intensität des Umgebungslichtes.

2. Verfahren zur Einstellung der Hintergrundbeleuchtung nach Anspruch 1, wobei die maximale und/oder minimale Intensität der Hintergrundbeleuchtung von einem Banutzer des Gerätes begrenzt wird.

3. Verfahren nach Anspruch 1, wobei ein Verhältnis der Abweichung der Intensität der Hintergrundbeleuchtung zu einer Abweichung des Umgebungslichtes eingestellt wird.

4. Verfahren nach Anspruch 1, wobei das Positionssystem ein globales Positionssystem (GPS) ist.

5. Verfahren nach Anspruch 1, wobei das Positionssystem ein globales Kommunikationssystem für mobile Geräte ist, auf der Grundlage eines Positionssystems.

## Revendications

1. Procédé de réglage d'intensité de rétro-éclairage pour un dispositif mobile comprenant un écran, qui comprend un rétro-éclairage, et un système de positionnement, dans lequel ledit procédé comprend les étapes suivantes
- la détermination d'une première position du dispositif en utilisant le système de positionnement ;
- l'identification du fait que le dispositif mobile est en utilisation à l'intérieur ou en utilisation à l'extérieur ;
- la détermination de données de conditions ambiantes comprenant une position du soleil, des informations de conditions météorologiques et un effet des conditions météorologiques sur une lumière ambiante ; si le dispositif est identifié comme étant en utilisation à l'extérieur ;
- l'estimation d'une intensité de la lumière ambiante sur la base des données de conditions ambiante :
- le réglage de l'intensité de rétro-éclairage en fonction de l'intensité de lumière ambiante estimée,
**caractérisé en ce que** le procédé comprend en outre les étapes suivantes :
- la détermination d'une deuxième position du dispositif en utilisant le système de positionnement après un temps d'attente prédéterminé ;
- le calcul d'une déviation de position du dispositif en différenciant la première position et la deuxième position ;
- si la déviation de position du dispositif est inférieure à un seuil prédéterminé, l'identification du dispositif comme étant en utilisation à l'intérieur et le réçlage de l'intensité de rétro-éclairage à un niveau d'intérieur prédéterminé ;
- si la déviation de position du dispositif est supérieure au seuil prédéterminé, l'identification du dispositif comme étant en utilisation à l'extérieur et le réglage de l'intensité de rétro-éclairage en fonction de l'intensité de lumière ambiante estimée.

2. Procédé de réglage d'intensité de rétro-éclairage selon la revendication 1, dans lequel l'intensité de rétro-éclairage maximale et/ou minimale est limitée par un utilisateur du dispositif.

3. Procédé de réglage d'intensité de rétro-éclairage selon la revendication 1, dans lequel un rapport entre un écart d'intensité de rétro-éclairage et un écart de lumière ambiante est réglé.

4. Procédé de réglage d'intensité de rétro-éclairage Selon la revendication 1, dans lequel ledit système de positionnement est un système de positionnement global.

5. Procédé de réglage d'intensité de rétro-éclairage selon la revendication 1, dans lequel ledit système de positionnement est un système de positionnement basé sur un système de communication global pour dispositifs mobiles.
